# EUROPEAN PATENT SPECIFICATION

(11) **EP 4 534 517 B1**
(45) Date of publication and mention of the grant of the patent: **29.04.2026**
(21) Application number: 22944789.1
(22) Date of filing: 31.05.2022
(51) Int. Cl.: C10L 3/08, C01B 3/34, C01B 3/50, C01B 32/50, C25B 1/23, C25B 15/08, H01M 8/0612, H01M 8/0668, H01M 8/10

(54) **DISTRIBUTED METHANATION SYSTEM**
VERTEILTES METHANISIERUNGSSYSTEM
SYSTÈME DE MÉTHANATION DISTRIBUÉE

(43) Date of publication of application: 09.04.2025
(73) Proprietor: MITSUBISHI ELECTRIC CORPORATION, Chiyoda-ku Tokyo 100-8310 (JP)
(72) Inventor: ONAKA, Yoji, Tokyo 100-8310 (JP); TANISHIMA, Makoto, Tokyo 100-8310 (JP); SHINOKI, Toshio, Tokyo 100-8310 (JP); KAWAMOTO, Makoto, Tokyo 100-8310 (JP); NAKASHIMA, Seiji, Tokyo 100-8310 (JP)
(74) Representative: Meissner Bolte Partnerschaft mbB
(86) International application number: PCT/JP2022/022040
(87) International publication number: WO 2023/233500

(56) References cited:
- WO-A1-2015/085981
- DE-A1- 102018 007 001
- JP-A- 2019 108 238
- JP-A- 2022 022 978
- ANONYMOUS: "Contributing to decarbonization of city gas, Succeeded in prototyping of new SOEC, which is the key to realizing "innovative methanation", OSAKA GAS CO., LTD., ENERGY TECHNOLOGY LABORATORY - PRESS RELEASE, 25 January 2021 (2021-01-25), XP093116899, Retrieved from the Internet <URL:https://www.osakagas.co.jp/company/press/pr2021/__icsFiles/afieldfile/2021/01/25/210125_2.pdf> [retrieved on 20240108]
- ONISHI HISAO: "Challenge for co-production of SOEC methanation and C2-4 components, 3rd Study Group for Development of Green LP Gas Production Technology", OSAKA GAS CO., LTD., ENERGY TECHNOLOGY LABORATORY - PRESS RELEASE, 22 January 2021 (2021-01-22), pages 1 - 27, XP093116900, Retrieved from the Internet <URL:https://www.j-lpgas.gr.jp/data/greenlpg_presen_DG_20210122.pdf> [retrieved on 20240108]
- 大阪ガス株式会社, Daigasグループ カーボンニュートラルビジョン, DAIGAS GROUP. 2021, 1/17-17/17, https://www.osakagas.co.jp/company/press/pr2021/__icsFiles/afieldfile/2021/01/25/210125_3_1.pdf, (OSAKA GAS CO., LTD., Daigas Group Carbon Neutral Vision.)

## Description

### Technical Field

The present invention relates to a distributed methanation system.

### Background Art

Patent Document 1 discloses a device for producing methane using carbon dioxide and water. The device reduces water and carbon dioxide to obtain a synthesis gas containing hydrogen and carbon monoxide. The device generates methane from the synthesis gas.

WO2015085981A1 describes that the hydrogen is methanized with synthesis gas and the natural gas obtained stores similar methane in the gas network and converts methane back into hydrogen in the steam reformer for recirculation in the fuel cell.

### Citation List

### Patent Documents

Patent Document 1: Japanese Unexamined Patent Application, First Publication JP 2022- 22 978 A

### Summary of the Invention

### Problem to be Solved by the Invention

In this type of device, it is required to efficiently recover carbon dioxide as a raw material.

In view of the above-described circumstances, an object of the present invention is to provide a distributed methanation system capable of efficiently recovering carbon dioxide.

### Means to Solve the Problem

According to the invention, the problem is solved by the subject matter outlined in independent claim 1. Advantageous further developments of the invention are set forth in the dependent claims.

### Effects of the Invention

According to the present invention, it is possible to provide a distributed methanation system that is capable of efficiently recovering carbon dioxide.

### Brief Description of Drawings

FIG. 1 A schematic diagram of a distributed methanation system according to Embodiment 1.
FIG. 2 A block diagram of a distributed methanation system according to Embodiment 1.
FIG. 3 A schematic diagram of a distributed methanation system according to Embodiment 2.
FIG. 4 A schematic diagram of a distributed methanation system according to Embodiment 3.

### Description of Embodiments

Hereinafter, an embodiment of the present invention will be described with reference to the drawings. The scope of the present invention is not limited to the following embodiment, and can be changed in any way within the scope of technical ideas of the present invention.

### Embodiment 1.

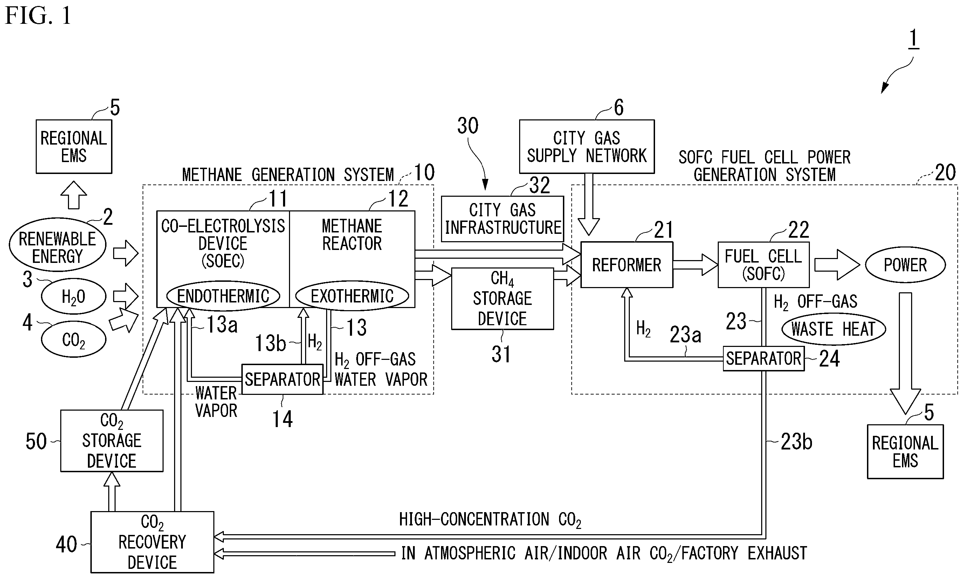

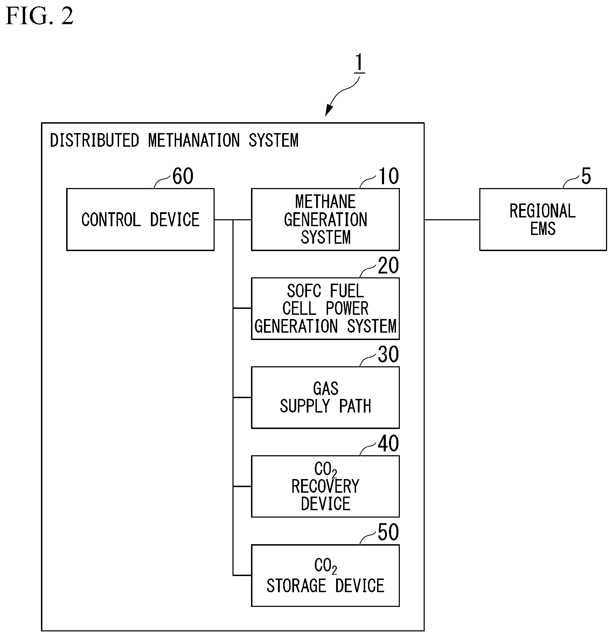

FIG. 1 is a schematic diagram of a distributed methanation system 1 in Embodiment 1. FIG. 2 is a block diagram of a distributed methanation system 1 in Embodiment 1.

### Distributed Methanation System 1

The distributed methanation system 1 generates methane from power, water, and carbon dioxide. The distributed methanation system 1 generates power from the generated methane.

As shown in FIG. 1, the distributed methanation system 1 is supplied with power from an external power generation system 2. Examples of the power generation system 2 include renewable energy power generation systems. Examples of renewable energy power generation systems include a solar power generation system and a wind power generation system. Note that the power generation system 2 is not limited to the renewable energy power generation systems. For example, the power generation system 2 may be a power generation system using thermal power.

Water is supplied to the distributed methanation system 1 from an external water supply system 3. Water is supplied to the distributed methanation system 1 from an external carbon dioxide supply system 4. As the water supply system 3 and the carbon dioxide supply system 4, a known configuration can be adopted. In the present embodiment, the distributed methanation system 1 recovers at least a part of the carbon dioxide required for methane generation. In a case where the distributed methanation system 1 recovers all the carbon dioxide required for methane generation, the carbon dioxide supply system 4 may not need to supply carbon dioxide to the distributed methanation system 1.

The distributed methanation system 1 supplies the generated power to, for example, a power grid of a region. The power grid of the region is managed and operated by, for example, an energy management system (regional EMS 5) of the corresponding region. The distributed methanation system 1 is connected to the regional EMS 5. The regional EMS 5 may receive power from the power generation system 2 in addition to the power from the distributed methanation system 1.

As shown in FIGS. 1 and 2, the distributed methanation system 1 includes a methane generation system 10, a methane generation system 10, a fuel cell power generation system 20, a gas supply path 30, a carbon dioxide recovery device 40, a carbon dioxide storage device 50, and a control device 60.

The methane generation system 10 is supplied with power, water, and carbon dioxide to generate methane. The methane generation system 10 includes a co-electrolysis device 11, a methane reactor 12, a first circulation flow path 13, and a first separator 14.

The co-electrolysis device 11 includes, for example, a solid oxide electrolysis cell (SOEC) including a cathode electrode and an anode electrode. For example, a solid oxide with oxygen ion conductivity is used in the solid oxide electrolysis cell. As the electrolyte, zirconia-based oxides or the like are used.

Co-electrolysis device 11 supplies the water supplied by the water supply system 3 to the cathode electrode of the solid oxide electrolysis cell. It is desirable that the water used for the co-electrolysis in the solid oxide electrolysis cell is in the form of water vapor. The co-electrolysis device 11 supplies the carbon dioxide supplied from the carbon dioxide supply system 4 or the like to the cathode electrode of the solid oxide electrolysis cell.

The co-electrolysis device 11 may include a heating device that heats the solid oxide electrolysis cell. The heating device can adjust the temperature within the solid oxide electrolysis cell to a temperature suitable for the co-electrolysis reaction.

The ratio of carbon dioxide and water supplied to the solid oxide electrolysis cell can be determined according to the ratio of the components (carbon monoxide, hydrogen) of the target mixed gas.

The co-electrolysis device 11 obtains a mixed gas containing carbon monoxide (CO) and hydrogen (H₂) from carbon dioxide (CO₂) and water (H₂O) by co-electrolysis. The co-electrolysis proceeds, for example, according to the following Formula (I). This reaction is an endothermic reaction.

CO₂ + H₂O → CO + H₂ + O₂ ... (I)

In the co-electrolysis device 11, for example, the co-electrolysis can be performed using power generated by using renewable energy (for example, solar power generation, wind power generation, and the like). Since the methane obtained by using the renewable energy does not generate additional carbon dioxide even in a case of being utilized for combustion, it can be considered as a carbon neutral fuel that does not affect global warming.

The methane reactor 12 obtains a fuel gas containing methane (CH₄) and water (H₂O) from carbon monoxide (CO) and hydrogen (H₂) by a methanation reaction. The methanation reaction proceeds, for example, according to the following Formula (II). This reaction is an exothermic reaction.

CO + 3H₂ → CH₄ + H₂O ... (II)

The methane reactor 12 preferably includes a methanation catalyst that comes into contact with the mixed gas. Examples of methanation catalysts include a Ni catalyst and a Ru catalyst. The methanation catalysts promote the methanation reaction.

The first circulation flow path 13 circulates the off-gas (hereinafter, referred to as a first off-gas) in the methane reactor 12 to the co-electrolysis device 11 and the methane reactor 12. The first off-gas mainly contains hydrogen and water vapor. The first circulation flow path 13 is branched into two branch paths midway. In the two branch paths, a first branch path 13a is connected to the co-electrolysis device 11, and the second branch path 13b is connected to the methane reactor 12.

The first separator 14 is provided at a branch point in the first circulation flow path 13. The first separator 14 separates the first off-gas into a first gas and a second gas. The first gas mainly contains water vapor. The water vapor concentration of the first gas is higher than the water vapor concentration of the first off-gas. The second gas mainly contains hydrogen. The hydrogen concentration of the second gas is higher than the hydrogen concentration of the first off-gas. The first separator 14 separates the first off-gas into water vapor (first gas) and hydrogen (second gas).

The first separator 14 supplies the first gas (water vapor) to the co-electrolysis device 11 through the first branch path 13a. The first separator 14 supplies the second gas (hydrogen) to the methane reactor 12 through the second branch path 13b. By supplying a part (first gas) of the first off-gas to the co-electrolysis device 11 by the first separator 14, the heat generated from the exothermic reaction in the methane reactor 12 can be utilized in the endothermic reaction in the co-electrolysis device 11.

The fuel cell power generation system 20 includes a reformer 21, a fuel cell 22, a second circulation flow path 23, and a second separator 24.

The reformer 21 converts the methane supplied from the methane generation system 10 into hydrogen. The reformer 21 is supplied with a fuel gas from the methane generation system 10. In the present embodiment, the fuel gas from the methane generation system 10 is supplied via the gas supply path 30. The gas supply path 30 supplies the methane (fuel gas) generated by the methane reactor 12 to the reformer 21 via a methane storage device 31 or a gas infrastructure 32. Here, supplying methane to the reformer 21 via the gas infrastructure 32 includes, for example, supplying methane through existing city gas pipelines or supplying methane by transporting the methane in cylinders.

The methane storage device 31 and the gas infrastructure 32 may not be necessary. In addition, the reformer 21 may be supplied with city gas (fuel gas, methane gas) from a city gas supply network 6 in addition to the fuel gas from the methane generation system 10.

The reformer 21 obtains a reforming gas containing carbon monoxide (CO) and hydrogen (H₂) from methane and water (water vapor) contained in the fuel gas by a reforming reaction. The reforming reaction proceeds, for example, according to the following Formula (III).

CH₄ + H₂O → CO + 3H₂ ... (III)

The reformer 21 preferably includes a reforming catalyst that comes into contact with the fuel gas. Examples of the reforming catalyst include a Ni catalyst and a Ru catalyst. The reforming catalyst promotes the reforming reaction.

It is desirable that the reformer 21 includes a carbon monoxide converter and a carbon monoxide remover. The concentration of carbon monoxide in the reforming gas can be lowered by the carbon monoxide converter and the carbon monoxide remover. The carbon monoxide converter includes a carbon monoxide conversion catalyst such as a Cu catalyst and a Fe catalyst.

In the carbon monoxide converter, a part of the carbon monoxide is converted into carbon dioxide. The carbon monoxide remover includes a methanation catalyst that converts carbon monoxide into methane. Examples of the methanation catalyst include a Ru catalyst. In the carbon monoxide remover, a part of the carbon monoxide is converted into methane.

Since the concentration of carbon monoxide in the reforming gas is lowered by the carbon monoxide converter and the carbon monoxide remover, the reforming gas becomes a gas mainly containing hydrogen (H₂).

The fuel cell 22 generates power using hydrogen supplied from the reformer 21. The fuel cell 22 is, for example, a solid oxide fuel cell (SOFC). The anode of the fuel cell 22 is supplied with reforming gas. The cathode of the fuel cell 22 is supplied with an oxygen-containing gas (oxidant-containing gas). The oxygen-containing gas is, for example, air. In the fuel cell 22, power is generated by a reaction between the reforming gas containing hydrogen (H₂) and the oxygen-containing gas. This reaction is an exothermic reaction. In the fuel cell 22, a product gas containing water (water vapor) is obtained through the reaction between the reforming gas and the oxygen-containing gas. The product gas includes not only water (water vapor) but also unreacted hydrogen (H₂) and carbon dioxide.

The second circulation flow path 23 circulates the off-gas in the fuel cell 22 (hereinafter, referred to as the second off-gas) to the fuel cell 22. The second off-gas mainly contains hydrogen and carbon dioxide. The second circulation flow path 23 is branched into two branch paths midway. In the two branch paths, the third branch path 23a is connected to the reformer 21, and the fourth branch path 23b is connected to the carbon dioxide recovery device 40. The second circulation flow path 23 recirculates the second off-gas (off-gas of hydrogen generated in the fuel cell 22) to the fuel cell 22 through the third branch path 23a and the reformer 21. The third branch path 23a may be connected to the fuel cell 22 instead of the reformer 21.

The second separator 24 is provided at the branch point in the second circulation flow path 23. The second separator 24 separates the second off-gas into a third gas and a fourth gas. The third gas mainly contains hydrogen. The hydrogen concentration of the third gas is higher than the hydrogen concentration of the second off-gas. The fourth gas mainly contains carbon dioxide. The carbon dioxide concentration of the fourth gas is higher than the carbon dioxide concentration of the second off-gas.

For example, the fourth gas is a high-concentration carbon dioxide gas with a carbon dioxide concentration of 50 % or more. The second separator 24 separates carbon dioxide from the second off-gas (hydrogen off-gas). The second separator 24 separates the second off-gas into hydrogen (third gas) and carbon dioxide (fourth gas).

The second separator 24 supplies the third gas (hydrogen) to the fuel cell 22 through the third branch path 23a. The second separator 24 supplies the fourth gas (carbon dioxide) to the carbon dioxide recovery device 40 through the fourth branch path 23b. In a case where the second separator 24 supplies a part of the second off-gas to the carbon dioxide recovery device 40, the heat (waste heat) generated in the exothermic reaction in the fuel cell 22 may be utilized in the endothermic reaction in the carbon dioxide recovery device 40.

The carbon dioxide recovery device 40 recovers carbon dioxide (carbon dioxide separated by the second separator 24) from the fourth gas, which is a part of the second off-gas. In the carbon dioxide recovery device 40, for example, separation methods such as adsorption separation, membrane separation, cooling separation, centrifugal separation, gravity separation, or gas-liquid separation are adopted. In the carbon dioxide recovery device 40, one of these separation methods may be adopted, or two or more of these separation methods may be combined.

In the carbon dioxide recovery device 40 using adsorption separation, for example, a specific component is adsorbed onto an adsorbent, an adsorbing liquid, or the like to be separated. Examples of the adsorbent include silica gel, zeolite, and activated carbon. Specifically, by adsorbing a component containing carbon dioxide onto the adsorbent, the component can be separated from other components. The adsorbent may be granular, powdery, or the like. The granular shape is, for example, bead-shaped (spherical) or pellet-shaped (cylindrical). In a case where a powdery adsorbent is used, the adsorbent may be supported on the surface of the base material. The base material may, for example, have a honeycomb shape.

The carbon dioxide recovery device 40 using adsorption separation has a function of separating carbon dioxide from the adsorbent. The carbon dioxide recovery device 40 includes, for example, a heating device. The heating device separates carbon dioxide from the adsorbent by heating the adsorbent. The carbon dioxide recovery device 40 may include a decompression device such as a vacuum pump. The decompression device separates carbon dioxide from the adsorbent by holding the adsorbent under reduced pressure.

In the carbon dioxide recovery device 40 using membrane separation, for example, a specific component is separated from other components by using a permeable membrane that allows low-molecular weight components to permeate through. Specifically, a component containing hydrogen (H2) can be separated from a component containing carbon dioxide using a palladium permeable membrane.

The carbon dioxide recovery device 40 using cooling separation, for example, liquefies a specific component by cooling to separate the component from other components (gases). Specifically, the component containing water can be liquefied and separated from the gas containing carbon dioxide.

The carbon dioxide recovery device 40 using centrifugal separation, for example, liquefies a specific component (component including water) by cooling, and separates the component from other components (gas including carbon dioxide) by centrifugal force. In the carbon dioxide recovery device 40 using gravity separation, for example, a specific component (component including water) is liquefied by cooling, and the component is separated from other components (gas including carbon dioxide) by gravity. In the carbon dioxide recovery device 40 using gas-liquid separation, for example, a specific component (component including water) is liquefied by cooling, and the component is separated from other components (gas including carbon dioxide) by gravity, centrifugal force, surface tension, or the like.

In the present embodiment, the carbon dioxide recovery device 40 recovers carbon dioxide from another carbon dioxide recovery source in addition to the carbon dioxide emitted from the fuel cell power generation system 20. Another carbon dioxide recovery source is at least one of atmospheric air, indoor air, and factory exhaust. However, the carbon dioxide recovery device 40 may recover only the carbon dioxide emitted from the fuel cell power generation system 20.

The carbon dioxide recovery device 40 may directly supply the recovered carbon dioxide to the co-electrolysis device 11. The carbon dioxide recovery device 40 may supply the recovered carbon dioxide to the carbon dioxide storage device 50. The carbon dioxide storage device 50 supplies the stored carbon dioxide to the co-electrolysis device 11. The carbon dioxide recovery device 40 may indirectly supply the recovered carbon dioxide to the co-electrolysis device 11 via the carbon dioxide storage device 50. The carbon dioxide storage device 50 may not be necessary.

As shown in FIG. 2, the control device 60 controls each configuration of the distributed methanation system 1. The control device 60 controls the methane generation system 10, the fuel cell power generation system 20, the gas supply path 30, the carbon dioxide recovery device 40, and the carbon dioxide storage device 50.

The control device 60 includes artificial intelligence that has been trained on the power demand and supply amount. The artificial intelligence forecasts the power demand and supply amount. Examples of the demand amount of power include the power amount required in the regional EMS 5. Examples of the supply amount of power include the power generation amount of the power generation system 2 (renewable energy power generation system). The artificial intelligence uses, for example, date and time data, weather data, or the like as input values to forecast (output) the power demand and supply amount. It should be noted that the artificial intelligence may not be necessary.

### Operation Method of Distributed Methanation System 1

Next, an example of the operation method of the above-described distributed methanation system 1 shown in FIGS. 1 and 2 will be described. Note that the operation method is not limited to any or all of the following examples.

The control device 60 may control the operation status of the distributed methanation system 1 based on the forecast result of the power demand and supply amount with artificial intelligence. The operation status of the distributed methanation system 1 refers to the ratio between resource operation and power generation operation. Here, the resource operation refers to storing gases such as methane or carbon dioxide by, for example, generating methane or recovering carbon dioxide based on the power supplied from the power generation system 2. The power generation operation refers to, for example, generating power from methane.

The power generation operation refers to, for example, generating power from stored methane or generating methane from stored carbon dioxide and then generating power from the methane. The power generation operation refers to generating power from the methane supplied from the city gas supply network 6 or generating power from the methane generated from the carbon dioxide supplied from the carbon dioxide supply system 4.

Hereinafter, the power generated by the power generation system 2 is also referred to as a first power, and the power generated by the distributed methanation system 1 is also referred to as a second power. The resource operation refers to, for example, converting the first power into gas (carbon dioxide or methane) and storing it. The power generation operation refers to, for example, generating the second power.

For example, if artificial intelligence forecasts a power shortage after a certain period (for example, several days, several weeks, or several months), the control device 60 may convert the first power into gas and store it in preparation for the shortage. In this case, for example, the control device 60 may perform different controls in the first period and in the second period when the power demand is smaller than in the first period. The first period may be, for example, a future period when a power shortage is forecasted.

The second period may be, for example, a present period to prepare for a power shortage. In the second period, the control device 60 reduces the power generation amount of the fuel cell power generation system 20 compared to the first period. Meanwhile, in the second period, the control device 60 increases the recovery of carbon dioxide from the other carbon dioxide recovery sources (at least one of atmospheric air, indoor air, and factory exhaust) described above, compared to the first period. In a case where the control device 60 is preparing for a power shortage in the future period (first period) as described above, the control device 60 may increase the ratio of the resource operation and store methane or carbon dioxide in the present period (second period).

Examples of the first period and the second period include periods in units of, for example, several days, several weeks, or several months. In a case where the first period and the second period are in units of several months, and in the region experiences climate changes due to the four seasons, such as in Japan, the first period may be summer or winter, and the second period may be spring or autumn.

Further, the control device 60 may perform different controls in a third period when power demand in a region is tight and in a fourth period when there is surplus in the power demand of the region. The power demand which is tight in the region may refer to, for example, that the power demand in each region is equal to or more than a first ratio (for example, 90 % or more) with respect to the power amount that can be supplied to each region from the power grid in each region. Surplus in the power demand of the region may refer to, for example, that the power demand in the region is not tight.

Surplus in the power demand of the region may refer to, for example, that the power demand in each region is equal to or less than a second ratio (for example, 50 % or less) with respect to the power amount that can be supplied to each region from the power grid in each region. The control device 60 may determine whether the power demand in the region is tight or whether there is surplus in the power demand of the region, for example, by simply acquiring the determination result from the regional EMS 5.

In the third period, the control device 60 supplies the power supplied to the distributed methanation system 1 to the power grid of the region. Additionally, during the third period, the control device 60 emits the methane stored in advance to generate power in the fuel cell power generation system 20, and supplies the power to the power grid.

Meanwhile, the control device 60 generates methane in the methane generation system 10 from at least a part of the power supplied to the distributed methanation system 1, water, and carbon dioxide, and stores at least a part of the generated methane in a tank, during the fourth period. In this case, the control device 60 may supply methane to the fuel cell power generation system 20 to generate the second power.

The control device 60 may control the methane generation amount of the methane generation system 10 and the power generation amount of the fuel cell power generation system 20 according to the power demand and supply status in the regional EMS 5. In this case, for example, even when the control device 60 does not include artificial intelligence, for example, it is possible to appropriately control the ratio between the resource operation and the power generation operation by acquiring information on the power demand and supply in the regional EMS 5.

As described above, in the distributed methanation system 1 according to the present embodiment, the carbon dioxide recovery device 40 recovers the carbon dioxide separated by the second separator 24. As a result, the high-concentration carbon dioxide concentrated by the fuel cell 22 can be recovered. As a result, the cost of recovering carbon dioxide can be reduced. Further, the carbon dioxide required in the methane generation system 10 can be recycled.

The methane generation system 10 is provided with the methane storage device 31. As a result, when the power generation amount of the power generation system 2 is large, the methane generated excessively can be stored. **In** addition, when the power generation amount of the power generation system 2 is small, the stored methane can be used to generate power.

The carbon dioxide recovery device 40 is provided with the carbon dioxide storage device 50. As a result, for example, even when the power demand is low, the carbon dioxide recovery device 40 can store carbon dioxide, which serves as a raw material for methane, by recovering the carbon dioxide. As a result, the control range of the power generation amount in the distributed methanation system 1 can be improved.

The carbon dioxide recovery device 40 recovers carbon dioxide from another carbon dioxide recovery source in addition to the carbon dioxide emitted from the fuel cell power generation system 20. Therefore, the distributed methanation system 1 can achieve zero emission or negative emission of carbon dioxide.

The control device 60 controls the operation status of the distributed methanation system 1 based on the forecast result of the power demand and supply amount obtained by artificial intelligence. As a result, the forecast accuracy of the power demand and supply amount is improved, and it is possible to reduce the gap between the demand amount of energy and the power generation amount in the entire region, thereby enabling stable operation of the distributed methanation system 1.

The control device 60 controls the methane generation amount of the methane generation system 10 and the power generation amount of the fuel cell power generation system 20 according to the power demand and supply status in the regional EMS 5. As a result, for example, according to the power demand, the mixing amount of the methane supplied from the methane generation system 10 and the methane supplied from the city gas supply network 6 can be increased and the power generation amount of the fuel cell power generation system 20 can be increased, thereby adjusting the operation balance.

The control device 60 reduces the power generation amount of the fuel cell power generation system 20 during the second period, when the power demand is small, compared to the first period, and increases the recovery of carbon dioxide from another carbon dioxide recovery source compared to the first period. As a result, according to the power demand, the recovery amount of carbon dioxide, which is likely to be insufficient during methane generation, can be increased even when the power demand is low. As a result, for example, the carbon dioxide can be stored in the carbon dioxide storage device 50.

In the third period when the power demand in the region is tight, the control device 60 supplies the power supplied to the distributed methanation system 1 to the power grid of the region, generates power in the fuel cell power generation system 20 by emitting the methane stored in advance, and supplies the power to the power grid. The control device 60 has the methane generation system 10 generate methane from at least a part of the power supplied to the distributed methanation system 1, water, and carbon dioxide and has the tank store a part of the generated methane, during the fourth period when there is surplus in the power demand of the region.

In this way, according to the power demand and supply status in the region, for example, the operation of supplying a large amount of power to the power grid of the region as in the third period and the operation of converting at least a part of the power into methane to store the methane as in the fourth period are switched. As a result, for example, even when the power is from a renewable energy power generation system, the power can be stabilized.

### Embodiment 2.

Next, a distributed methanation system 1A according to Embodiment 2 will be described. Since the basic configuration of the distributed methanation system 1A according to the present embodiment is the same as that of Embodiment 1, the differences will be mainly described.

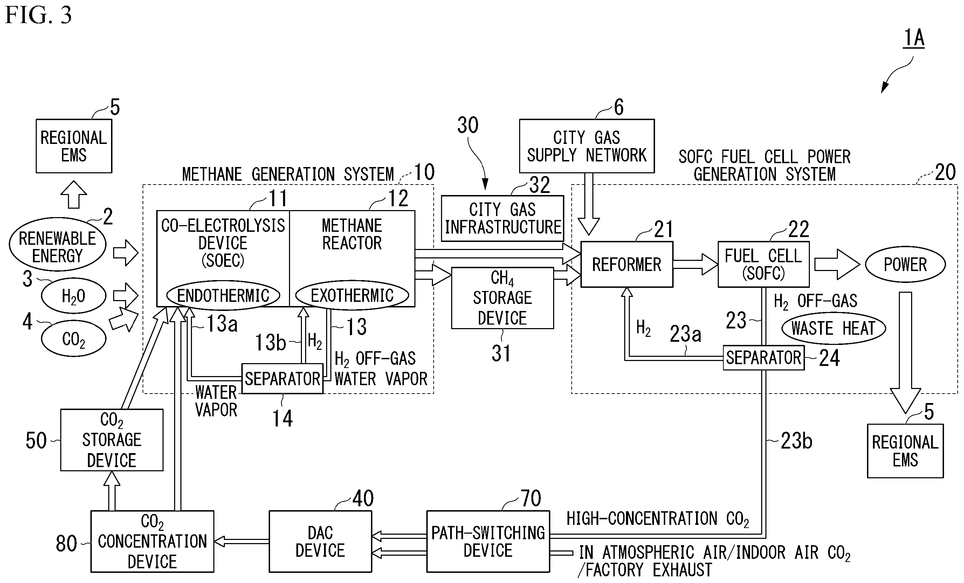

In the present embodiment, as shown in FIG. 3, in the distributed methanation system 1A, the carbon dioxide recovery device 40 is a direct air capture (DAC) device. Examples of this type of carbon dioxide recovery device 40 include a DAC device utilizing blower power or cold/hot heat of an air conditioning device. Examples of the blower power of the air conditioning device include the blower of the outdoor machine and the blower of the indoor machine. Examples of the cold/hot heat of the air conditioning device include the cold/hot heat generated from the refrigerant during cooling operation or heating operation.

Further, the carbon dioxide recovery device 40 is provided with a path-switching device 70 and a carbon dioxide concentration device 80. The path-switching device 70 switches the recovery source of carbon dioxide of the carbon dioxide recovery device 40 between the fuel cell power generation system 20 and the other carbon dioxide recovery sources (at least one of atmospheric air, indoor air, and factory exhaust) described above.

As the path-switching device 70, a known configuration, such as a valve provided in a pipe, can be appropriately adopted. For example, the path-switching device 70 may be controlled by the control device 60. When increasing the recovery amount of carbon dioxide from the other carbon dioxide recovery sources described above, the control device 60 can control, for example, the path-switching device 70.

A gas containing the carbon dioxide recovered by the carbon dioxide recovery device 40 (hereinafter, referred to as a fifth gas) is sent to the carbon dioxide concentration device 80. The carbon dioxide concentration device 80 increases the carbon dioxide concentration in the fifth gas and sends it downstream as a sixth gas. For example, the carbon dioxide concentration device 80 can increase the carbon dioxide concentration of the sixth gas compared to the carbon dioxide concentration of the fifth gas by using separation methods such as adsorption separation, membrane separation, cooling separation, centrifugal separation, gravity separation, and gas-liquid separation, like the carbon dioxide recovery device 40. The sixth gas is supplied to the co-electrolysis device 11 or stored in the carbon dioxide storage device 50.

As described above, in the distributed methanation system 1A according to the present embodiment, the carbon dioxide recovery device 40 is a DAC device that utilizes the blower power or the cold/hot heat of the air conditioning device. As a result, the recovery amount of carbon dioxide can be increased by effectively utilizing the blower power or the cold/hot heat of the air conditioning device.

The path-switching device 70 switches the recovery source of carbon dioxide of the carbon dioxide recovery device 40 between the fuel cell power generation system 20 and another carbon dioxide recovery source. As a result, a recovery path can be switched between when the fuel cell power generation system 20 is activated and when it is not activated, allowing for the recovery of carbon dioxide.

### Embodiment 3.

Next, a distributed methanation system 1B according to Embodiment 3 will be described. Since the basic configuration of the distributed methanation system 1B according to the present embodiment is the same as that of the Embodiment 2, the differences will be mainly described.

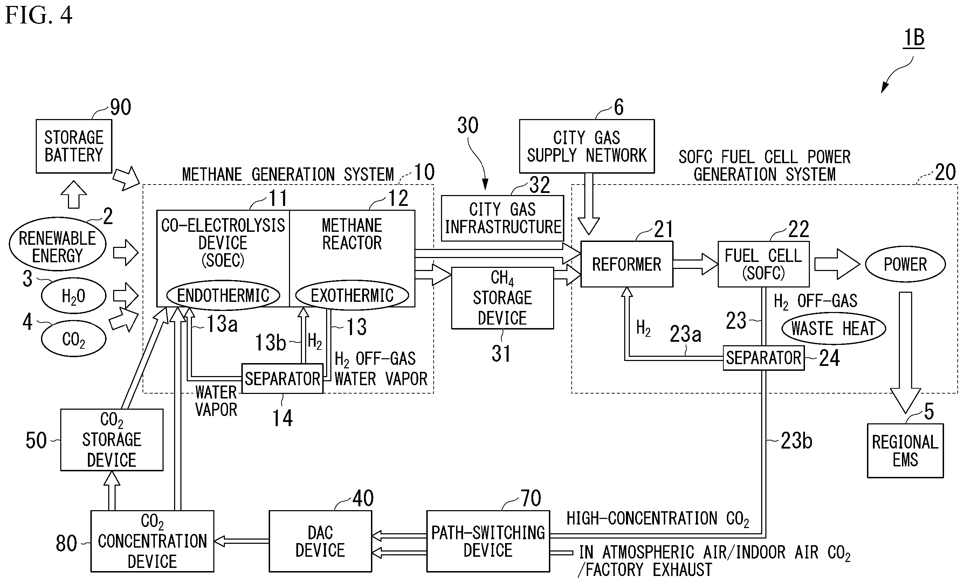

As shown in FIG. 4, the distributed methanation system 1B according to the present embodiment further includes a storage battery 90. The power from the power generation system 2 is supplied to and stored in the storage battery 90. The storage battery 90 is capable of supplying the stored power to the distributed methanation system 1B.

### Operation Method of Distributed Methanation System 1B

Next, an example of the operation method of the above-described distributed methanation system 1B will be described. Note that the operation method is not limited to these examples. In addition, these examples may be combined for operation.

The control device 60 performs different controls in a fifth period and in a sixth period. The fifth period is a period when the power generation amount of the power generation system 2 (renewable energy power generation system) is larger than the power required in the distributed methanation system 1. The sixth period is a period when the power generation amount of the power generation system 2 is smaller than the power required in the distributed methanation system 1. The control device 60 is capable of calculating, for example, the power required in the distributed methanation system 1. The control device 60 is capable of acquiring, for example, the power generation amount of the power generation system 2 from the power generation system 2.

In the fifth period, the control device 60 stores surplus power from the renewable energy power generation system in the storage battery 90. In the sixth period, the control device 60 may discharge the storage battery 90 to cause the methane generation system 10 to generate methane, or may recover carbon dioxide in the carbon dioxide recovery device 40. The methane generated during the sixth period and the carbon dioxide are each stored in the methane storage device 31 and the carbon dioxide storage device 50.

As described above, in the distributed methanation system 1 according to the present embodiment, the control device 60 has the storage battery 90 store the surplus power from the power generation system 2 during the fifth period, when the power generation amount of the power generation system 2 larger than the power required in the distributed methanation system 1. The control device 60 discharges from the storage battery 90 to cause the methane generation system 10 to generate methane or recovers carbon dioxide in the carbon dioxide recovery device 40 during the sixth period, when the power generation amount of the power generation system 2 is smaller than the power required in the distributed methanation system 1. As a result, the power generation variation of renewable energy can be reduced, and methane and carbon dioxide can be stably supplied.

However, the technical scope of the present invention is not limited to the above embodiments, and various modifications can be made without departing from the gist of the present invention.

The control device 60 includes, for example, a computer system. A program for implementing the functions of each of the configurations of the above-described distributed methanation system 1 may be recorded on a computer-readable recording medium, and the program recorded on the recording medium may be read into a computer system and executed, whereby the program may perform processing in each of the configurations described above. Here, the phrase "the program recorded on the recording medium may be read into a computer system, and the program may be executed" includes installing the program in the computer system. It is assumed that the term "computer system" described here includes an OS and hardware such as a peripheral device.

In addition, the term "computer system" may include a plurality of computer devices connected via a network, including communication lines such as the Internet, WAN, LAN, or dedicated lines. In addition, the term "computer-readable recording medium" refers to a portable medium such as a flexible disk, a magneto-optical disk, a ROM, and a CD-ROM, and a storage device such as a hard disk built in the computer system. As described above, the recording medium in which the program is stored may be a non-transitory recording medium such as a CD-ROM.

In addition, the recording medium also includes a recording medium provided internally or externally, which is accessible from a distribution server, to distribute the program. It should be noted that the program may be divided into multiple parts and integrated by each configuration of the distributed methanation system 1 after downloaded at different timings. Additionally, the distribution servers that distribute each divided part of the program may be different.

Further, the term "computer-readable recording medium" also includes volatile memory (RAM) within a computer system such as a server or a client, which holds the program for a certain period of time when the program is transmitted via a network. In addition, the program may be a program for implementing some of the functions described above. Further, the program may be a so-called difference file (difference program) capable of implementing the functions described above in combination with a program recorded in advance in the computer system.

All or some of the functions of the control device 60 are implemented by using hardware such as an application specific integrated circuit (ASIC), a programmable logic device (PLD), or a field programmable gate array (FPGA).

In addition, the above-described embodiments or modification examples may be combined as appropriate.

### List of Reference Signs

- 1, 1A, 1B:: Distributed methanation system
- 2:: Power generation system
- 5:: Regional EMS (Energy Management System)
- 10:: Methane generation system
- 11:: Co-electrolysis device
- 12:: Methane Reactor
- 20:: Fuel cell power generation system
- 21:: Reformer
- 22:: Fuel cell
- 23:: Second circulation flow path
- 24:: Second separator
- 30:: Gas supply path
- 31:: Methane storage device
- 32:: Gas infrastructure
- 40:: Carbon dioxide recovery device
- 50:: Carbon dioxide storage device
- 60:: Control device
- 70:: Path-switching device
- 90:: Storage battery

## Claims

1. A distributed methanation system (1, 1A, 1B) comprising:
- a methane generation system (10) that includes a co-electrolysis device (11) and a methane reactor (12), and that is configured to generate methane from power, water, and carbon dioxide; and
- a fuel cell power generation system (20) that includes a reformer (21) configured to convert the methane supplied from the methane generation system (10) into hydrogen, and a fuel cell (22) configured to generate power using the hydrogen supplied from the reformer (21),
wherein the fuel cell power generation system (20) includes a circulation flow path (23) that is configured to recirculate an off-gas generated in the fuel cell (22) to the fuel cell (22) and a separator (24) that is configured to separate carbon dioxide from the off-gas, and
the distributed methanation system (1, 1A, 1B) further comprises a carbon dioxide recovery device (40) that is configured to recover the carbon dioxide separated by the separator (24).

2. The distributed methanation system (1, 1A, 1B) according to Claim 1, further comprising: a gas supply path (30) through which the methane generated in the methane reactor (12) is supplied to the reformer (21) via a methane storage device (31) or a gas infrastructure (32).

3. The distributed methanation system (1, 1A, 1B) according to Claim 1 or 2, wherein the methane generation system (10) is provided with a methane storage device (31).

4. The distributed methanation system (1, 1A, 1B) according to any one of Claims 1 to 3,
wherein the carbon dioxide recovery device (40) is provided with a carbon dioxide storage device (50).

5. The distributed methanation system (1, 1A, 1B) according to any one of Claims 1 to 4,
wherein the carbon dioxide recovery device (40) is configured to recover carbon dioxide from another carbon dioxide recovery source in addition to the carbon dioxide emitted from the fuel cell power generation system (20).

6. The distributed methanation system (1, 1A, 1B) according to Claim 5, wherein the carbon dioxide recovery device (40) is provided with a path-switching device (70) that is configured to switch a recovery source of carbon dioxide obtained by the carbon dioxide recovery device (40) between the fuel cell power generation system (20) and the other carbon dioxide recovery source.

7. The distributed methanation system (1, 1A, 1B) according to any one of Claims 1 to 6,
wherein the carbon dioxide recovery device (40) is a DAC device (40) that is configured to utilize blower power or cold/hot heat of an air conditioning device.

8. The distributed methanation system (1, 1A, 1B) according to any one of Claims 1 to 7,
further comprising: a control device (60) configured to control the methane generation system (10), the fuel cell power generation system (20), and the carbon dioxide recovery device (40).

9. The distributed methanation system (1, 1A, 1B) according to Claim 8, wherein the distributed methanation system (1, 1A, 1B) is connected to an energy management system (5), and
the control device (60) is configured to control a methane generation amount of the methane generation system (10) and a power generation amount of the fuel cell power generation system (20) according to a power demand and supply status in the energy management system (5).

10. The distributed methanation system (1, 1A, 1B) according to Claim 8 or 9, wherein the carbon dioxide recovery device (40) is configured to recover carbon dioxide from another carbon dioxide recovery source in addition to the carbon dioxide emitted from the fuel cell power generation system(20), the control device (60) is configured to perform different controls in a first period and in a second period when power demand is smaller than in the first period, and
during the second period, the control device (60) is configured to reduce a power generation amount of the fuel cell power generation system (20) compared to the first period and increases the recovery of carbon dioxide from the other carbon dioxide recovery source compared to the first period.

11. The distributed methanation system (1, 1A, 1B)
according to any one of Claims 8 to 10,
wherein the control device (60) is configured to perform different controls in a third period when power demand in a region is tight and in a fourth period when there is surplus in the power demand of the region,
during the third period, the control device (60) is configured to supply the power supplied to the distributed methanation system (1, 1A, 1B) to a power grid of the region, generate power in the fuel cell power generation system (20) by emitting methane stored in advance, and supply the power to the power grid, and
during the fourth period, the control device (60) has the methane generation system (10) configured to generate methane from at least a part of the power supplied to the distributed methanation system (1, 1A, 1B), water, and carbon dioxide, and has a tank store at least a part of the generated methane.

12. The distributed methanation system (1, 1A, 1B)
according to any one of Claims 8 to 11,
wherein the distributed methanation system (1, 1A, 1B) is supplied with power from a renewable energy power generation system,
the distributed methanation system (1, 1A, 1B) further comprises a storage battery (90), and
the control device (60) is configured to perform different controls in a fifth period when a power generation amount of the renewable energy power generation system is larger than power required in the distributed methanation system
(1, 1A, 1B) and in a sixth period when the power generation amount of the renewable energy power generation system is smaller than in the power required in the distributed methanation system (1, 1A, 1B).

13. The distributed methanation system (1, 1A, 1B) according to Claim 12, wherein the control device (60) has the storage battery (90) configured to store surplus power from the renewable energy power generation system during the fifth period, and has the storage battery (90) configured to discharge to cause the methane generation system (10) to generate methane during the sixth period.

14. The distributed methanation system (1, 1A, 1B) according to Claim 12, wherein the control device (60) has the storage battery (90) configured to store surplus power from the renewable energy power generation system during the fifth period, and has the storage battery (90) configured to discharge to recover carbon dioxide by the carbon dioxide recovery device (40) during the sixth period.

15. The distributed methanation system (1, 1A, 1B)
according to any one of Claims 8 to 14,
wherein the control device (60) includes artificial intelligence that has been trained on a power demand and supply amount using machine learning, and the control device (60) is configured to control an operation status of the distributed methanation system (1, 1A, 1B) based on a forecast result of the power demand and supply amount by the artificial intelligence, wherein the operation status of the distributed methanation system
(1, 1A, 1B) is a ratio between resource operation and power generation operation.

## Patentansprüche

1. Verteiltes Methanisierungssystem (1, 1A, 1B), das Folgendes aufweist:
- ein Methangerzeugungssystem (10), das eine Co-Elektrolysevorrichtung (11) und einen Methanreaktor (12) aufweist und so konfiguriert ist, dass es aus Strom, Wasser und Kohlendioxid Methan erzeugt; und
- ein Brennstoffzellen-Stromerzeugungssystem (20), das einen Reformer (21) aufweist, der so konfiguriert ist, dass er das vom Methanerzeugungssystem (10) gelieferte Methan in Wasserstoff umwandelt, und eine Brennstoffzelle (22), die so konfiguriert ist, dass sie unter Verwendung des vom Reformer (21) gelieferten Wasserstoffs Strom erzeugt,
wobei das Brennstoffzellen-Stromerzeugungssystem (20) einen Zirkulationsströmungsweg (23) aufweist, der so konfiguriert ist, dass er ein in der Brennstoffzelle (22) erzeugtes Abgas zur Brennstoffzelle (22) zurückführt, und einen Separator (24), der so konfiguriert ist, dass er Kohlendioxid aus dem Abgas abscheidet, und
das verteilte Methanisierungssystem (1, 1A, 1B) ferner eine Kohlendioxid-Rückgewinnungsvorrichtung (40) aufweist, die so konfiguriert ist, dass sie das durch den Separator (24) abgeschiedene Kohlendioxid zurückgewinnt.

2. Verteiltes Methanisierungssystem (1, 1A, 1B) nach Anspruch 1,
das ferner Folgendes aufweist: einen Gaszuführungsweg (30), durch den das im Methanreaktor (12) erzeugte Methan über eine Methanspeichervorrichtung (31) oder eine Gasinfrastruktur (32) dem Reformer (21) zugeführt wird.

3. Verteiltes Methanisierungssystem (1, 1A, 1B) nach Anspruch 1 oder 2, wobei das Methangerzeugungssystem (10) mit einer Methanspeichervorrichtung (31) ausgebildet ist.

4. Verteiltes Methanisierungssystem (1, 1A, 1B) nach einem der Ansprüche 1 bis 3,
wobei die Kohlendioxid-Rückgewinnungsvorrichtung (40) mit einer Kohlendioxid-Speichervorrichtung (50) ausgebildet ist.

5. Verteiltes Methanisierungssystem (1, 1A, 1B)
nach einem der Ansprüche 1 bis 4,
wobei die Kohlendioxid-Rückgewinnungsvorrichtung (40) so konfiguriert ist, dass sie zusätzlich zu dem aus dem Brennstoffzellen-Stromerzeugungssystem (20) ausgestoßenen Kohlendioxid Kohlendioxid aus einer weiteren Kohlendioxid-Rückgewinnungsquelle zurückgewinnt.

6. Verteiltes Methanisierungssystem (1, 1A, 1B) nach Anspruch 5, wobei die Kohlendioxid-Rückgewinnungsvorrichtung (40) mit einer Wegumschaltvorrichtung (70) ausgebildet ist, die so konfiguriert ist, dass sie eine Rückgewinnungsquelle für Kohlendioxid, das durch die Kohlendioxid-Rückgewinnungsvorrichtung (40) gewonnen worden ist, zwischen dem Brennstoffzellen-Stromerzeugungssystem (20) und der anderen Kohlendioxid-Rückgewinnungsquelle umschaltet.

7. Verteiltes Methanisierungssystem (1, 1A, 1B)
nach einem der Ansprüche 1 bis 6,
wobei die Kohlendioxid-Rückgewinnungsvorrichtung (40) eine DAC-Vorrichtung (40) ist, die so konfiguriert ist, dass sie die Gebläsekraft oder die Kälte-/Wärmeenergie einer Klimaanlage nutzt.

8. Verteiltes Methanisierungssystem (1, 1A, 1B)
nach einem der Ansprüche 1 bis 7,
welches ferner eine Steuervorrichtung (60) aufweist, die so konfiguriert ist, dass sie das Methanerzeugungssystem (10), das Brennstoffzellen-Stromerzeugungssystem (20) und die Kohlendioxid-Rückgewinnungsvorrichtung (40) steuert.

9. Verteiltes Methanisierungssystem (1, 1A, 1B) nach Anspruch 8,
wobei das verteilte Methanisierungssystem (1, 1A, 1B) mit einem Energiemanagementsystem (5) verbunden ist und
die Steuervorrichtung (60) so konfiguriert ist, dass sie eine Methanerzeugungsmenge des Methanerzeugungssystems (10) und eine Stromerzeugungsmenge des Brennstoffzellen-Stromerzeugungssystems (20) entsprechend einem Strombedarf und einem Versorgungsstatus im Energiemanagementsystem (5) steuert.

10. Verteiltes Methanisierungssystem (1, 1A, 1B) nach Anspruch 8 oder 9, wobei die Kohlendioxid-Rückgewinnungsvorrichtung (40) so konfiguriert ist, dass sie Kohlendioxid aus einer anderen Kohlendioxid-Rückgewinnungsquelle zusätzlich zu dem aus dem Brennstoffzellen-Stromerzeugungssystem (20) ausgestoßenen Kohlendioxid zurückgewinnt, die Steuervorrichtung (60) so konfiguriert ist, dass sie in einem ersten Zeitraum und in einem zweiten Zeitraum, wenn der Strombedarf geringer ist als im ersten Zeitraum, unterschiedliche Steuerungen durchführt, und die Steuervorrichtung (60) während des zweiten Zeitraums so konfiguriert ist, dass sie die Stromerzeugungsmenge des Brennstoffzellen-Stromerzeugungssystems (20) im Vergleich zum ersten Zeitraum reduziert und die Rückgewinnung von Kohlendioxid aus der anderen Kohlendioxid-Rückgewinnungsquelle im Vergleich zum ersten Zeitraum erhöht.

11. Verteiltes Methanisierungssystem (1, 1A, 1B)
nach einem der Ansprüche 8 bis 10,
wobei die Steuervorrichtung (60) so konfiguriert ist, dass sie in einem dritten Zeitraum, wenn der Strombedarf in einem Bereich knapp ist, und in einem vierten Zeitraum, wenn ein Überschuss im Strombedarf des Bereichs besteht, unterschiedliche Steuerungen durchführt,
wobei die Steuervorrichtung (60) während des dritten Zeitraums so konfiguriert ist, dass sie den an das verteilte Methanisierungssystem (1, 1A, 1B) gelieferten Strom an ein Stromnetz des Bereichs liefert, im Brennstoffzellen-Stromerzeugungssystem (20) durch Emission von zuvor gespeichertem Methan Strom erzeugt und den Strom an das Stromnetz liefert, und
während des vierten Zeitraums die Steuervorrichtung (60) das Methangerzeugungssystem (10) so konfiguriert, dass es aus zumindest einem Teil des an das verteilte Methanisierungssystem (1, 1A, 1B) gelieferten Stroms, Wasser und Kohlendioxid erzeugt, und einen Tank aufweist, der zumindest einen Teil des erzeugten Methans speichert.

12. Verteiltes Methanisierungssystem (1, 1A, 1B)
nach einem der Ansprüche 8 bis 11,
wobei das verteilte Methanisierungssystem (1, 1A, 1B) mit Strom aus einem Stromerzeugungssystem mit erneuerbaren Energien versorgt wird, das verteilte Methanisierungssystem (1, 1A, 1B) ferner eine Speicherbatterie (90) aufweist und
die Steuervorrichtung (60) so konfiguriert ist, dass sie in einem fünften Zeitraum, wenn die Stromerzeugungsmenge des Stromerzeugungssystems mit erneuerbaren Energien größer ist als der im verteilten Methanisierungssystem (1, 1A, 1B) benötigte Strom, und in einem sechsten Zeitraum, wenn die Stromerzeugungsmenge des Stromerzeugungssystems für erneuerbare Energien geringer ist als der im verteilten Methanisierungssystem (1, 1A, 1B) benötigte Strom, unterschiedliche Steuerungen durchführt.

13. Verteiltes Methanisierungssystem (1, 1A, 1B) nach Anspruch 12, wobei die Steuervorrichtung (60) die Speicherbatterie (90) so konfiguriert hat, dass sie während des fünften Zeitraums überschüssigen Strom aus dem Stromerzeugungssystem für erneuerbare Energien speichert, und die Speicherbatterie (90) so konfiguriert hat, dass sie sich entlädt, um das Methanerzeugungssystem (10) während des sechsten Zeitraums zur Erzeugung von Methan zu veranlassen.

14. Verteiltes Methanisierungssystem (1, 1A, 1B) nach Anspruch 12, wobei die Steuervorrichtung (60) die Speicherbatterie (90) so konfiguriert hat, dass sie überschüssigen Strom aus dem Stromerzeugungssystem für erneuerbare Energien während des fünften Zeitraums speichert, und die Speicherbatterie (90) so konfiguriert hat, dass sie sich entlädt, um Kohlendioxid durch die Kohlendioxid-Rückgewinnungsvorrichtung (40) während des sechsten Zeitraums zurückzugewinnen.

15. Verteiltes Methanisierungssystem (1, 1A, 1B)
nach einem der Ansprüche 8 bis 14,
wobei die Steuervorrichtung (60) künstliche Intelligenz aufweist, die anhand von maschinellem Lernen auf den Strombedarf und die Stromversorgungsmenge trainiert worden ist, und
die Steuervorrichtung (60) so konfiguriert ist, dass sie den Betriebsstatus des verteilten Methanisierungssystems (1, 1A, 1B) auf der Grundlage eines Vorhersageergebnisses des Strombedarfs und der Stromversorgungsmenge durch die künstliche Intelligenz zu steuern, wobei der Betriebsstatus des verteilten Methanisierungssystems (1, 1A, 1B) ein Verhältnis zwischen Ressourcenbetrieb und Stromerzeugungsbetrieb ist.

## Revendications

1. Système de méthanisation décentralisé (1, 1A, 1B) comprenant :
- un système de génération de méthane (10) qui inclut un dispositif de co-électrolyse (11) et un réacteur à méthane (12), et qui est configuré pour générer du méthane à partir d'une puissance, d'eau et de dioxyde de carbone ; et
- un système de génération de puissance à pile à combustible (20) qui inclut un reformeur (21) configuré pour convertir le méthane alimenté depuis le système de génération de méthane (10) en hydrogène, et une pile à combustible (22) configurée pour générer une puissance à l'aide de l'hydrogène alimenté depuis le reformeur (21),
dans lequel le système de génération de puissance à pile à combustible (20) inclut un trajet d'écoulement de circulation (23) qui est configuré pour faire recirculer un gaz résiduel généré dans la pile à combustible (22) jusqu'à la pile à combustible (22) et un séparateur (24) qui est configuré pour séparer un dioxyde de carbone du gaz résiduel, et
le système de méthanisation décentralisé (1, 1A, 1B) comprend en outre un dispositif de récupération de dioxyde de carbone (40) qui est configuré pour récupérer le dioxyde de carbone séparé par le séparateur (24).

2. Système de méthanisation décentralisé (1, 1A, 1B) selon la revendication 1, comprenant en outre : un trajet d'alimentation en gaz (30) à travers lequel le méthane généré dans le réacteur à méthane (12) est alimenté au reformeur (21) via un dispositif de stockage de méthane (31) ou une infrastructure de gaz (32).

3. Système de méthanisation décentralisé (1, 1A, 1B) selon la revendication 1 ou 2, dans lequel le système de génération de méthane (10) est muni d'un dispositif de stockage de méthane (31).

4. Système de méthanisation décentralisé (1, 1A, 1B)
selon l'une quelconque des revendications 1 à 3,
dans lequel le dispositif de récupération de dioxyde de carbone (40) est muni d'un dispositif de stockage de dioxyde de carbone (50).

5. Système de méthanisation décentralisé (1, 1A, 1B)
selon l'une quelconque des revendications 1 à 4,
dans lequel le dispositif de récupération de dioxyde de carbone (40) est configuré pour récupérer du dioxyde de carbone à partir d'une autre source de récupération de dioxyde de carbone en addition au dioxyde de carbone émis depuis le système de génération de puissance à pile à combustible (20).

6. Système de méthanisation décentralisé (1, 1A, 1B) selon la revendication 5, dans lequel le dispositif de récupération de dioxyde de carbone (40) est muni d'un dispositif de commutation de trajet (70) qui est configuré pour commuter une source de récupération de dioxyde de carbone obtenu par le dispositif de récupération de dioxyde de carbone (40) entre le système de génération de puissance à pile à combustible (20) et l'autre source de récupération de dioxyde de carbone.

7. Système de méthanisation décentralisé (1, 1A, 1B)
selon l'une quelconque des revendications 1 à 6,
dans lequel le dispositif de récupération de dioxyde de carbone (40) est un dispositif DAC (Direct Air Capture) (40) qui est configuré pour utiliser une puissance de soufflante ou un courant de chaleur froid/chaud d'un dispositif de conditionnement d'air.

8. Système de méthanisation décentralisé (1, 1A, 1B)
selon l'une quelconque des revendications 1 à 7,
comprenant en outre : un dispositif de commande (60) configuré pour commander le système de génération de méthane (10), le système de génération de puissance à pile à combustible (20), et le dispositif de récupération de dioxyde de carbone (40).

9. Système de méthanisation décentralisé (1, 1A, 1B) selon la revendication 8, dans lequel le système de méthanisation décentralisé (1, 1A, 1B) est connecté à un système de gestion d'énergie (5), et
le dispositif de commande (60) est configuré pour commander une quantité de génération de méthane du système de génération de méthane (10) et une quantité de génération de puissance du système de génération de puissance à pile à combustible (20) en fonction d'un besoin de puissance et d'un état d'alimentation dans le système de gestion d'énergie (5).

10. Système de méthanisation décentralisé (1, 1A, 1B)
selon la revendication 8 ou 9,
dans lequel le dispositif de récupération de dioxyde de carbone (40) est configuré pour récupérer du dioxyde de carbone à partir d'une autre source de récupération de dioxyde de carbone en addition au dioxyde de carbone émis depuis le système de génération de puissance à pile à combustible (20),
le dispositif de commande (60) est configuré pour effectuer des commandes différentes dans une première période et dans une deuxième période quand un besoin de puissance est plus faible que dans la première période, et pendant la deuxième période, le dispositif de commande (60) est configuré pour réduire une quantité de génération de puissance du système de génération de puissance à pile à combustible (20) par comparaison à la première période et augmente la récupération de dioxyde de carbone à partir de l'autre source de récupération de dioxyde de carbone par comparaison à la première période.

11. Système de méthanisation décentralisé (1, 1A, 1B)
selon l'une quelconque des revendications 8 à 10,
dans lequel le dispositif de commande (60) est configuré pour effectuer des commandes différentes dans une troisième période quand un besoin de puissance dans une région est fort et dans une quatrième période quand il y a un surplus dans le besoin de puissance de la région,
pendant la troisième période, le dispositif de commande (60) est configuré pour acheminer la puissance alimentée au dispositif de méthanisation décentralisé (1, 1A, 1B) à un réseau électrique de la région, générer une puissance dans le système de génération de puissance à pile à combustible (20) en émettant un méthane stocké à l'avance, et alimenter la puissance au réseau électrique, et
pendant la quatrième période, le dispositif de commande (60) a le système de génération de méthane (10) configuré pour générer un méthane à partir d'au moins une partie de la puissance alimentée au système de méthanisation décentralisé (1, 1A, 1B), d'eau, et de dioxyde de carbone, et a un réservoir stockant une partie du méthane généré.

12. Système de méthanisation décentralisé (1, 1A, 1B) selon l'une quelconque des revendications 8 à 11,
dans lequel le système de méthanisation décentralisé (1, 1A, 1B) est alimenté en puissance provenant d'un système de génération de puissance à énergie renouvelable,
le système de méthanisation décentralisé (1, 1A, 1B) comprend en outre une batterie de stockage (90), et
le dispositif de commande (60) est configuré pour effectuer des commandes différentes dans une cinquième période quand une quantité de génération de puissance du système de génération de puissance à énergie renouvelable est supérieure à une puissance requise dans le système de méthanisation décentralisé (1, 1A, 1B) et dans une sixième période quand la quantité de génération de puissance du système de génération de puissance à énergie renouvelable est inférieure à la puissance requise dans le système de magnétisation décentralisé (1, 1A, 1B).

13. Système de méthanisation décentralisé (1, 1A, 1B)
selon la revendication 12,
dans lequel le dispositif de commande (60) a la batterie de stockage (90) configurée pour stocker le surplus de puissance provenant du système génération de puissance à énergie renouvelable pendant la cinquième période, et a la batterie de stockage (90) configurée pour une décharge pour amener le système de génération de méthane (10) à générer du méthane pendant la sixième période.

14. Système de méthanisation décentralisé (1, 1A, 1B)
selon la revendication 12,
dans lequel le dispositif de commande (60) a la batterie de stockage (90) configurée pour stocker un surplus de puissance provenant du système de génération de puissance à énergie renouvelable pendant la cinquième période, et a la batterie de stockage (90) configuré pour une décharger pour récupérer du dioxyde de carbone via le dispositif de récupération de dioxyde de carbone (40) pendant la sixième période.

15. Système de méthanisation décentralisé (1, 1A, 1B)
selon l'une quelconque des revendications 8 à 14,
dans lequel le dispositif de commande (60) inclut une intelligence artificielle qui a été entraînée quant à un besoin de puissance et une alimentation en puissance à l'aide d'un apprentissage automatique, et le dispositif de commande (60) est configuré pour commander un état de fonctionnement du système de méthanisation décentralisé (1, 1A, 1B) sur la base d'un résultat prévisionnel du besoin de puissance et de la quantité d'alimentation par l'intelligence artificielle, l'état de fonctionnement du système de méthanisation décentralisé (1, 1A, 1B) étant un rapport entre une exploitation des ressources et une opération de génération de puissance.
